# EUROPÄISCHE PATENTSCHRIFT

(11) **EP 0 742 668 B1**
(45) Veröffentlichungstag und Bekanntmachung des Hinweises auf die Patenterteilung: **16.03.2005**
(21) Anmeldenummer: 96107037.2
(22) Anmeldetag: 04.05.1996
(51) Int. Cl.: H04N 7/088

(54) **Verfahren zum Wiedergeben von Datensignalen in Fernseh- oder Hörfunk-Programmkanälen**
Method for retrieving data signals from video or radio program channels
Méthode de reproduction de signaux de données dans des canaux d'émissions de télévision ou de radio

(30) Priorität: 09.05.1995 DE 19516933
(43) Veröffentlichungstag der Anmeldung: 13.11.1996
(73) Patentinhaber: DEUTSCHE THOMSON-BRANDT GMBH, 78048 Villingen-Schwenningen (DE)
(72) Erfinder: Eitz, Gerhard, 85586 Poing (DE); Brückner, Werner, 81929 München (DE); Gyarmati, Sandor, 78052 Villingen-Pfaffenweiler (DE)

(56) Entgegenhaltungen:
- EP-A- 0 306 208
- EP-A- 0 403 140
- EP-A- 0 484 806
- WO-A-91/02313
- WO-A-94/14284
- EITZ G ET AL: "VIDEOTEXT PROGRAMMIERT VIDEOHEIMGERATE (VPV)1" RUNDFUNKTECHNISCHE MITTEILUNGEN, Bd. 30, Nr. 5, 1. September 1986, Seiten 223-229, XP000021773

## Beschreibung

Die Erfindung bezieht sich auf ein Verfahren gemäß dem Oberbegriff des Patentanspruchs 1. Ein derartiges Verfahren ist aus der DE 39 14 697 C 2 bekannt.

Bei dem herkömmlichen, derzeit in Europa benutzten Teletextsystem wird der sog. "Level 1" des Teletext-Standards WST (World System Teletext) benutzt, welcher es erlaubt, auf einer Seite, die aus einer Kopfreihe und 23 Reihen besteht, Texte und graphische Darstellungen mit eingeschränktem Grundzeichensatz auf einem Bildschirm darzustellen.

Wie aus DE 39 14 697 C 2 bekannt, können zusätzlich zu diesen Seiten mit Level-1 weitere Ergänzungsdaten für Sonderzeichen, Feinstrukturen und Farbschattierungen übertragen werden. Empfangsseitig werden neben der gewünschten Level-1 Seite die zugehörigen Ergänzungsdaten zwischengespeichert und zusammen mit der betreffenden Level-1 Seite auf dem Bildschirm angezeigt.

Desweiteren ist es aus EP 0214 326 bekannt, zur Programmierung eines Videorecorders in Teletextseiten neben den sichtbar dargestellten Informationen, verdeckte Beitragskennungen mit erhöhten Fehlerschutz zu übertragen. Der Zuschauer markiert den gewünschten Programmbeitrag auf einer Programm Übersichtsseite und selektiert damit die zugehörige Beitragskennung für die Aufnahme. Die Beitragskennung, welche darüber hinaus weitere Kennziffern für die jeweilige Programmquelle und das Kalenderdatum enthält, identifiziert eindeutig einen Programmbeitrag und wird zusammen mit einem Programmbeitrag gesendet. Der Videorecorder beginnt mit der Aufzeichnung, wenn die vorprogrammierte mit der gerade detektierten Beitragskennung übereinstimmt. Mit einer derartigen Ereignisgesteuerten Aufzeichnung bleiben zeitliche Verschiebungen, Unterbrechungen usw. ohne Auswirkungen auf die Aufzeichnung, da der Videorecorder entsprechend reagieren kann. Bei einer Absetzung eines Programmbeitrages kann ein unnötig langes ,Lauern' des Videorecorders dadurch vermieden werden, daß anstatt der Beitragskennung ein spezielle Ausfallkennung gesendet wird.

Ferner ist es aus EP 0 264 565 B1 bekannt, Informationen über die momentan gesendeten Teletextseiten in Sonderseiten zu übertragen und empfängerseitig auszuwerten. Durch Auswertung der Sonderseite im Empfänger ist eine Überprüfung, ob eine vom Nutzer gewünschte Teletextseiten überhaupt gesendet ist, eine Anwahl der Teletextseiten ohne unnötige Wartezeit und eine optimale Nutzung des verfügbaren Dekoder- Speichers möglich.

Die Aufgabe der Erfindung besteht gegenüber darin, ein Verfahren der eingangs erwähnten Art dahingehend zu verbessern, daß für zukünftige Datendienste, die aus dem Teletextdienst weiterentwickelt und zusammen mit Fernseh- oder Hörfunksignalen oder auch eigenständig in einem eigenen Kanal übertragen werden, eine fehlerfreie, einfache Programmierung von Datendekodern zur

Aufnahme von gewünschten Datenprogrammen und eine entsprechende Signalisierung der gerade laufenden Datenprogramme erreicht wird. Als Datenprogramm ist dabei die Übertragung von einem oder mehreren Datenfiles beispielsweise für eine elektronische Zeitung, einen elektronischen Programmführer, einen Wetterdienst oder andere beliebige Datenfiles mit Texten, Bildern, ggf. Bildsequenzen und Tönen anzusehen. Insbesondere muß vermieden werden, daß ein bereits empfangenes Datenprogramm sich beim Aufruf durch den Benutzer als nicht lauffähig erweist, weil beispielsweise ein Unterprogramm fehlt oder die Systemkonfiguration des Benutzers unzureichend ist, weil die Rechenleistung zu gering ist.

Bei dem erfindungsgemäßen Verfahren wird eine fehlerfreie, einfache Programmierung eines Datendekoders zur Aufnahme von gewünschten Datenprogrammen dadurch erreicht, daß eine senderseitig generierte Daten-Guide-Tabelle zur Programmierung der Aufnahme und eine Daten-Status-Tabelle zur Signalisierung der gerade laufenden Datenprogramme ausgewertet wird. Die Daten-Guide-Tabelle enthält neben Datum, Zeit, Rundfunkanstalt, Identifizierungsnummer und Länge der Files Informationen über die Hard- und Software- Konfiguration, welche zum Empfang, zur Dekodierung und zur Ausgabe des gewünschten Datenprogramms notwendig sind, und weitere Informationen zum automatischen Nachladen ggf. empfängerseitig fehlender Software. Damit kann bereits bei der Programmierung eines Datenprogramms eine Überprüfung der empfängerseitig notwendigen Systemkonfiguration durchgeführt und dem Benutzer eine Fehlermeldung bzw. Warnung ausgegeben werden, wenn das eigene System nicht für den Empfang, die Dekodierung oder die Ausgabe des gewünschten Datenprogramms geeignet ist. Außerdem kann auf mögliche Fehler hingewiesen werden und ggf. automatisch ein ähnliches Datenprogramm, welches an die empfängerseitige Systemkonfiguration angepaßt ist, geladen bzw. ein fehlendes Datenprogramm nachgeladen werden.

Vorteilhaft werden in der Daten-Status-Tabelle und/oder Daten-Guide-Tabelle auch Datendienst-Parameter übertragen, die weiterführende Informationen über alle übertragenen Datendienste enthalten.
Diese ermöglichen eine fehlerfreie Dekodierung auch für den Fall, daß die verschiedenen Datendienste unterschiedliche Übertragungs-Parameter verwenden. Zusätzlich kann vorteilhaft mit Hilfe der Datendienst-Parameter überprüft werden, ob der Dekoder geeignet ist, die jeweiligen Daten zu verarbeiten.

Die Datendienst-Parameter können hierbei die folgenden Informationen enthalten:
1) Form des Rahmenwortes für die Byte-Synchronisation des Datendienstes (Framing-Code);
2) eine Information darüber, ob die Datenübertragung seitenweise oder packetweise erfolgt;
   Bei einer seitenweisen Übertragung:
3a) die jeweilige Seitennummer;
3b) ob die 20ms-Regelung erfüllt, nicht oder nur teilweise erfüllt wird. Bei Erfüllung der 20ms-Regelung, d.h. bei einem Abstand von Header und nächster Datenzeile von mindestens 20 ms, ist eine Dekodierung auch durch existierende Dekoder möglich;
3c) nach welchem Protokoll die Übertragung erfolgt;
4)Channel Network Identification (CNI)-Code, d.h. Angabe des Kanalnamens, auf welchem der Datendienst übertragen wird.

Vorteilhaft werden die Datendienst-Parameter in der Daten-Guide-Tabelle DGT-2 übertragen. Zusätzlich kann in der Daten-Guide-Tabelle DGT-1 eine Kanalliste mit den verschiedenen Kanalnamen übertragen werden, um dem Benutzer durch deren Anzeige eine Übersicht hierüber zu ermöglichen.

Die Erfindung wird anhand der Zeichnungen näher erläutert. Es zeigt:
- Fig. 1: eine schematische Darstellung eines analogen bzw. digitalen Fernsehempfängers mit einem Datendecoder und einem zugehörigen Datenspeicher und Einrichtungen zur Bild- und Tondekodierung;
- Fig. 2: eine schematische Darstellung einer Datenübertragung mit der Daten-Guide-Tabelle DGT und der Daten-Status-Tabelle DST;
- Fig. 3: eine schematische Darstellung der Daten-Guide-Tabelle DGT mit den für eine Programmierung des Datendekoders zur Aufnahme von gewünschten Daten relevanten Informationen;
- Fig. 4: eine schematische Darstellung der Daten-Status-Tabelle DST mit den für eine Signalisierung der gerade laufenden Datenübertragung wichtigen Informationen
- Fig.5: eine schematische Darstellung der Daten-Guide-Tabelle DGT mit den relevanten Informationen, die für eine Programmierung von Daten wichtig sind, die nur als Updates zu anderen Daten gesendet werden.

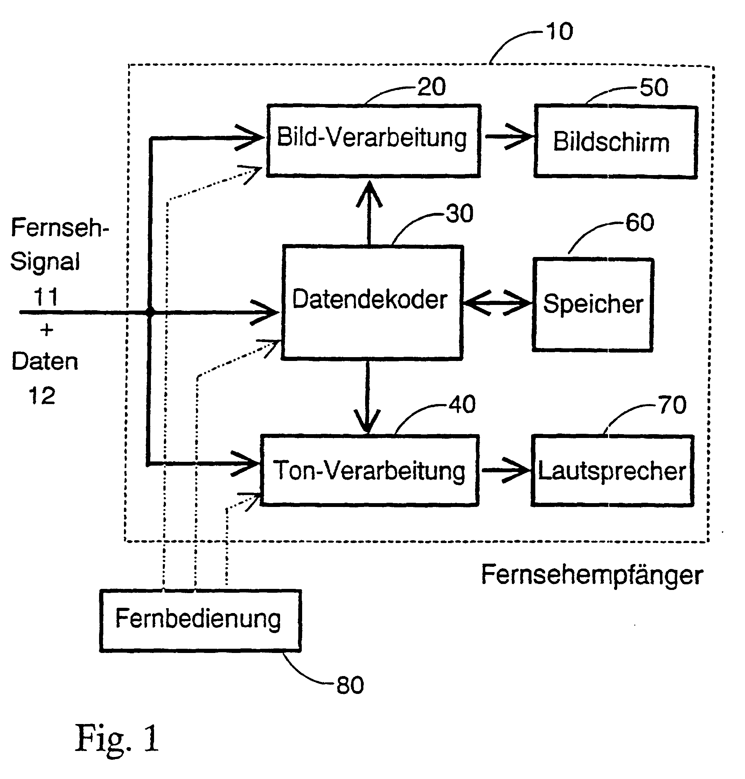

Fig. 1 zeigt ein Blockschaltbild eines zukünftigen Fernsehempfängers 10, der analoge oder digitale Fernsehsignale 11 und/oder Datensignale 12 empfangen und dekodieren kann. Im Falle eines digitalen Fernsehsignals können die Daten des Datensignals auch in dem Datenstrom des digitalen Fernsehsignals in geeigneter Weise enthalten sein. Im Falle eines analogen Fernsehsignals können die Daten des Datensignals auch in der vertikalen Austastlücke des Fernsehsignals enthalten sein. Das Fernsehsignal 11 und das Datensignals 12 werden einerseits einer Bild-Verarbeitung 20 zugeführt, welche das Fernsehsignal 12 dekodiert und auf dem Bildschirm 50 anzeigt, und wird andererseits einer Ton-Verarbeitung 40 zugeführt, welche die im Fernsehsignal enthaltenen Tonsignale (Fernsehtonsignale und/oder Hörfunksignale) dekodiert und an einen Lautsprecher ausgibt. Desweiteren werden das Fernsehsignal 11 und das Datensignal 12 einem Datendekoder 30 zugeführt. Der Datendekoder 30, der ähnlich wie die Bild- und die Ton-Verarbeitung 20, 40 über eine Fernbedienung 80 gesteuert wird, trennt die Daten des Datensignals 12, welche im analogen System seitenweise und im digitalen System blockweise geordnet sind, von dem Fernsehsignal 11 ab und speichert vorzugsweise die vom Benutzer per Fernbedienung 80 angeforderten Daten in einem Speicher 60. Sobald die angeforderten Daten vollständig eingetroffen sind, können sie aus dem Speicher 60 abgerufen und über die Bild- und Ton-Verarbeitung 20, 40 auf Bildschirm 50 und Lautsprecher 70 wiedergegeben werden.

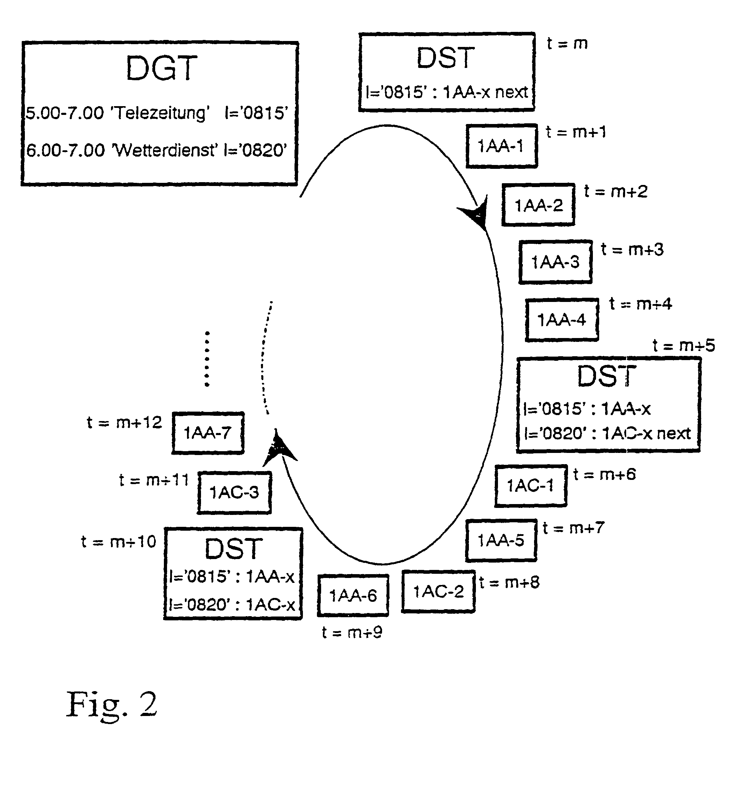

Fig. 2 zeigt schematisch den Inhalt des Datensignals 12 mit der Daten-Guide-Tabelle DGT, der Daten-Status-Tabelle DST und zwei Datenprogrammen, welche in Blöcken oder Seiten übertragen und empfangsseitig entsprechend der Sendeseite beispielsweise wieder zu Files zusammengestellt werden.

Die Daten-Guide-Tabelle DGT informiert den Benutzer über die von der betreffenden Rundfunkanstalt angebotenen Datenprogramme. Wie Fig. 2 zeigt, wird beispielsweise in der Zeit zwischen 5.00 und 7.00 Uhr eine Telezeitung mit der für den Benutzer nicht sichtbaren Identifizierungsinformation I='0815' und zwischen 6.00 und 7.00 Uhr ein Wetterdienst mit I='0820' übertragen. Der Benutzer wählt das gewünschte Datenprogramm aus, programmiert die Aufnahme, und der Datendekoder speichert die zugehörigen, für die gewünschte Aufnahme relevanten Informationen aus der DGT ab.

Die Daten-Status-Tabelle DST wird in zeitlich kurzen Abständen zwischen den verschiedenen Datenprogrammen übertragen und enthält Informationen über die Datenprogramme, welche gerade gesendet werden bzw. gesendet werden sollen. So zeigt die Daten-Status-Tabelle DST zum Zeitpunkt t=m , daß ein Datenprogramm mit der Identifizierungsinformation I='0815' demnächst unter der Block bzw. Seitennummer 1AA-x übertragen wird. Zum Zeitpunkt t=m+ 1 erfolgt die Übertragung des ersten Blocks bzw. der ersten Seite 1AA-1, bei t=m+2 von 1AA-2 usw. Zum Zeitpunkt t=m+5 kann wiederum eine Daten-Status-Tabelle DST mit Informationen über die gerade laufende Übertragung des Datenprogramms I='0815' und über eine demnächst auf Block bzw. Seite 1AC-x folgende Übertragung des Datenprogramms 1 = '0820' vom Datendekoder detektiert werden. Entsprechend der Ankündigung in der letzten DST, werden zu den folgenden Zeitpunkten t=m+6 , t=m+7 , usw. alternierend die Blöcke bzw. Seiten 1AC-x und 1AA-x für beide Datenprogramme übertragen.

Zur Aufnahme bzw. Speicherung des gewünschten Datenprogramms lädt der Datendekoder 30 im angegebenen Zeitraum die eintreffenden Daten-Status-Tabellen DST in einen Zwischenspeicher der innerhalb des Speichers 60 vorhanden sein kann und untersucht sie nach der bzw. den programmierten Identifizierungsinformation(en). Bei positiven Suchergebnis wird die zugehörige Block- bzw. Seitennummer detektiert und alle zu der bzw. den programmierten Identifizierungsinformation(en) gehörigen Blöcke bzw. Seiten hintereinander im Speicher 60 abgespeichert.

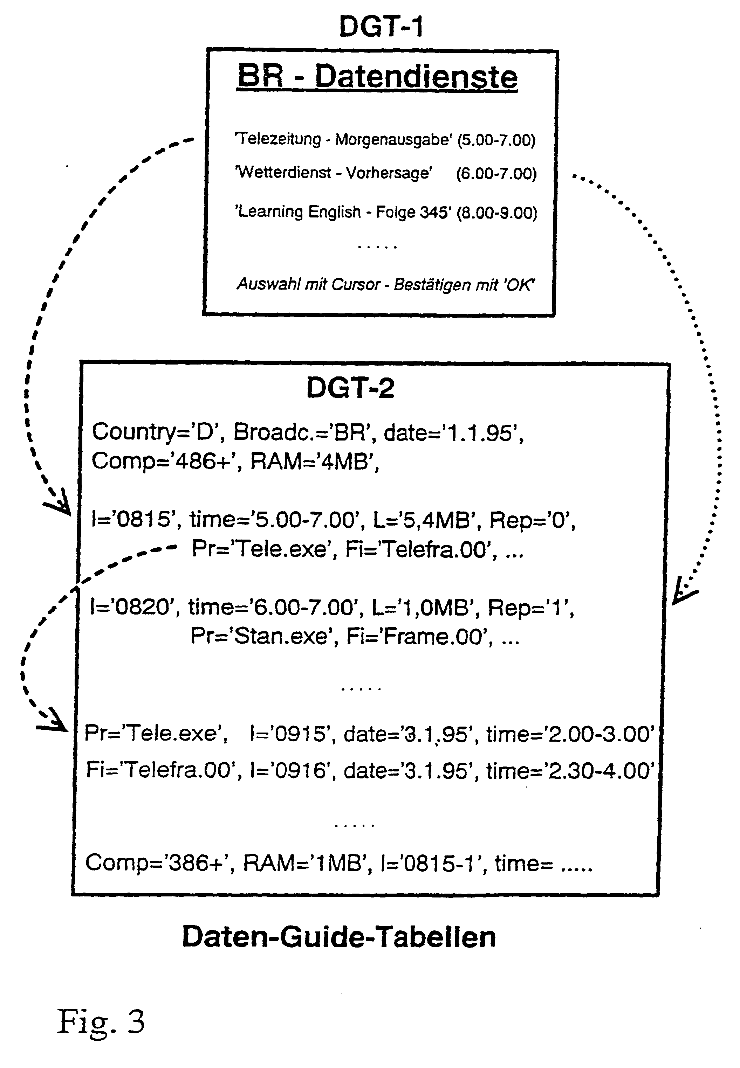

Zur Verdeutlichung der Erfindung zeigt Fig. 3 die für den Zuschauer sichtbare Daten-Guide-Tabelle DGT-1 und die zugehörige unsichtbare DGT-2. Der Klarschriftkennung 'Telezeitung - Morgenausgabe' in DGT-1 ist die Identifizierungsinformation I='0815' mit den Angaben über die Sendezeit (time='5.00-7.00'), die übertragene Datenmenge (L='5,4MB'), die Anzahl der Wiederholungen (Rep = '0') und weiteren Kennungen mit

Identifizierungsinformationen (Pr= 'Tele.exe' mit I='0915', date = ... und entsprechend Fi= 'Telefra.00' mit I='0916', date = ...) in DGT-2 zugeordnet. Außerdem sind in DGT-2 allgemeine Angaben über Land (Country='D'), Rundfunkanstalt (Broadc. = 'BR'), Sendedatum (date='1.1.95') und die notwendige Systemkonfiguration des Empfängers enthalten (Comp='486+' und RAM ,4MB').

Der Benutzer wählt per Fernbedienung 80 aus DGT-1 das gewünschte Datenprogramm, beispielsweise ,Telezeitung - Morgenausgabe', aus. Daraufhin überprüft der Datendekoder 30, ob die empfängerseitig vorhandene Systemkonfiguration und der Speicherplatz für das gewählte Datenprogramm ausreichend ist. Ist das Empfangssystem des Fernsehempängers 10 beispielsweise mit einem 386-Prozessor und 1 MByte RAM ausgestattet, so ist ein Empfang der ,Telezeitung - Morgenausgabe' mit I='0815' nicht möglich, da dieses Datenprogramm nur für 486-Prozessoren mit 4 MByte RAM geeignet ist. Statt dessen kann das Datenprogramm mit I='0815-1' von einem solchen Fernsehempfänger 10 empfangen, dekodiert und ausgegeben werden (siehe Fig. 3: Comp='386+' und RAM='1MB').

Der Datendekoder 30 überprüft außerdem, ob alle für die Dekodierung und Ausgabe des gewählten Datenprogramms notwendigen Daten im Fernsehempfänger 10 vorhanden sind; für die gewählte ,Telezeitung - Morgenausgabe' sind dies beispielsweise das Programm 'Tele.exe' und das Datenfile Telefra.00' (Fig. 3). Fehlt eines dieser Files, so kann es automatisch vom Fernsehempfänger 10 nachgeladen werden. Die dazu notwendigen Informationen befinden sich ebenso in DGT-2: Pr='Tele.exe' mit I='0915',... und Fi='Telefra.00' mit I='0916',...

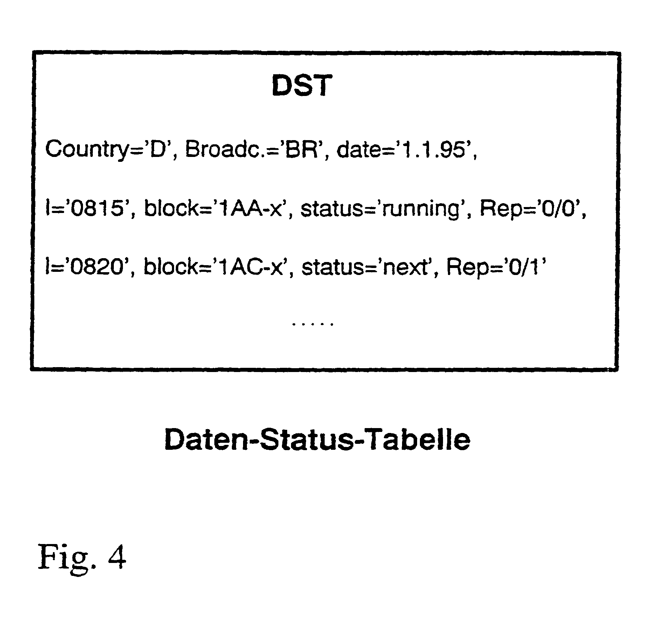

Fig.4 zeigt eine schematische Darstellung der Daten-Status-Tabelle DST mit den für eine Signalisierung der gerade laufenden Datenübertragung wichligen Informationen zum Zeitpunkt t=m+5 aus Fig. 1. Entsprechend der DGT-2 aus Fig.3 enthält die Daten-Status-Tabelle DST Angaben über das Land (Country='D'), die sendende Rundfunkanstalt (Broadc. ='BR') und das Sendedatum (date='1.1.95'). Wie in Fig.1 bereits erläutert, wird gerade das Datenprogramm 'Telezeitung - Morgenausgabe' mit der Identifizierungsinformation I='0815' in der Block- bzw. Seitennummer 1AA-x mit dem Status 'running' übertragen. Zusätzlich wird mit der Information Rep='0/0' bzw. Rep='0/1' bei I='0820' angegeben, daß die zugehörigen Daten das erste Mal gesendet werden und keine, bzw. eine Wiederholung der Datenübertragung folgen wird. Diese Information kann für Datendekoder 30 z.B. dann wichtig sein, wenn Blöcke fehlerhaft empfangen werden. So können, wenn noch eine nachfolgende Wiederholung signalisiert wird, beispielsweise fehlerhafte Blöcke durch korrekte Blöcke aus einem nachfolgenden Einlauf vom Datendecoder 30 ersetzt werden.

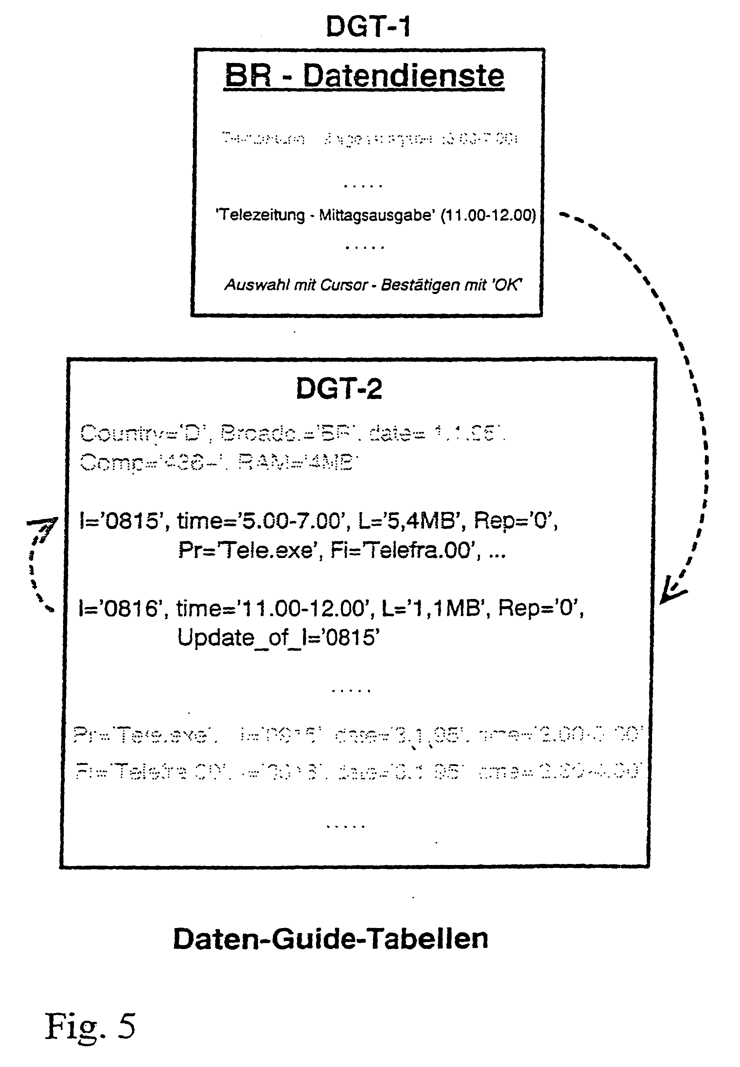

Eine Grundidee der Erfindung soll noch einmal an Fig.5 mit einer schematischen Darstellung der Daten-Guide-Tabelle DGT mit einem Datenprogramm verdeutlicht werden, welches als Update zu einem anderen Datenprogramm gesendet wird. Der Benutzer wählt die 'Telezeitung - Mittagsausgabe'; der Datendekoder 30 erkennt aus den Informationen in der DGT-2, daß das ausgewählte Datenprogramm Telezeitung - Mittagsausgabe' mit der Identifizierungsinformation I='0816' zwischen 11.00 und 12.00 Uhr als Update der 'Telezeitung - Morgenausgabe' mit I='0815' übertragen wird und speichert im Speicher 60 automatisch beide Datenprogramme ab. Damit ist gewährleistet, daß unvollständige bzw. Fehlprogrammierungen ausgeschlossen sind.

## Patentansprüche

1. Verfahren zum Wiedergeben von Datensignalen in Fernseh- oder Hörfunk-Programmkanälen, welche vom Programmsignal abgetrennt, die zu einer Identifizierungsinformation gehörigen Daten zu einem Datenprogramm zusammengestellt und die so zusammengestellten Daten zwischengespeichert werden, wobei in dem Datensignal Listen enthalten sind, die empfängerseitig ausgewertet werden, **dadurch gekennzeichnet, daß** in einer oder in mehreren Listen (DGT, DST) folgende, den Identifizierungsinformationen (I = 0815) zugeordnete Kennungen enthalten sind:
a) Konfigurationskennungen (COMP, RAM) für eine zum Empfangen, Dekodieren und Wiedergeben des Datenprogramms notwendige Empfängerkonfiguration, und/oder
b) File-Kennungen (Pr, Fi) für Datenfiles (Tele.exe, Telefra.OO) die zur Dekodierung und Wiedergabe des Datenprogramms notwendig sind,
wobei den Identifizierungsinformationen (I = 0815) Klarschriftkennungen ("Telezeitung - Morgenausgabe") zugeordnet sind, die in derselben Liste wie die Kennungen (COMP, RAM; Pr, Fi) oder in anderen Listen enthalten sind, und daß bei Anwahl einer Klarschriftkennung auf einer vom Benutzer selektierten Liste ein Prozeß initialisiert wird, bei welchen
c) die der Klarschriftkennung ("Telezeitung - Morgenausgabe") zugeordnete Konfigurationskennung (COMP, RAM) dahingehend ausgewertet wird, ob die Empfängerkonfiguration zum Empfangen, Dekodieren und Wiedergeben des durch die Identifizierungsinformation identifizierten Datenprogramms ausreichend ist, und/oder
d) die der Klarschriftkennung ("Telezeitung - Morgenausgabe") zugeordneten File-Kennungen (Pr, Fi) dahingehend ausgewertet wird, ob empfängerseitig die durch die File-Kennungen identifizierten Datenfiles vorhanden sind,
und bei welchen aufgrund positiver Ergebnisse beim Schritt c) und/oder beim Schritt d) die zur angewählten Klarschrift ("Telezeitung - Morgenausgabe") zugehörige Identifizierungsin formation zwischengespeichert wird und beim Empfang der zwischengespeicherten Identifizierungsinformation die Speicherung der zugehörigen Daten des Datenprogramms erfolgt, und bei welchen aufgrund negativer Ergebnisse beim Schritt c) und/oder beim Schritt d) eine entsprechende Mitteilung an den Benutzer ausgegeben wird.

2. Verfahren nach Anspruch 1, **dadurch gekennzeichnet, daß** weitere ldentifizierungsinformationen (I = 0815-1) mit zugeordneten weiteren Konfigurationskennungen (Comp=368+, RAM=1MB) für mindestens eine andere, empfängerseitig notwendige Systemkonfigurationen in den Listen (DGT-2) enthalten sind, und daß bei einem negativen Ergebnis beim Schritt c) anstatt der vom Benutzer angewählten Identifizierungsinformation (I=0815) mit Hilfe der weiteren Konfigurationskennungen diejenige (Comp=368+, RAM=1 MB) solche weiteren Identifizierungsinformation (I=0815-1) ersatzweise selektiert und zwischengespeichert werden, deren zugeordnete Konfigurationskennung für die empfängerseitige Systemkonfiguration zum Empfangen, Dekodieren und Wiedergeben des gewünschten Datenprogramms ausreichend ist.

3. Verfahren nach Anspruch 1, **dadurch gekennzeichnet, daß** bei einem negativen Ergebnis beim Schritt d) die Identifizierungsinformationen (10815), deren zugehörige Datenfiles (Tele.exe, Telefra.00) empfängerseitig nicht vorhanden sind, aus den fehlenden Datenfiles (Tele.exe, Telefra.00) zugeordneten Identifizierungs-informationen (I=0915, I=0916) detektiert und zwischengespeichert werden, und daß beim Empfang der zwischen gespeicherten Identifizierungsinformationen (I=0915, I=0916) die Speicherung der zugehörigen Datenfiles (Tele.exe, Telefra. 00) erfolgt.

4. Verfahren zum Übertragen von Datensignalen, die gemäß den Ansprüchen 1 bis 3 wiedergebenen werden, **gekennzeichnet durch** die wiederholte Übertragung einer gesonderten Liste (DST), in welcher wenigstens eine Identifizierungsinformation (I=0815) und die Seiten- oder Blocknummer(n) enthalten sind, unter welchen das **durch** die Identifizierungsinformation idenfizierte Datenprogramm übertragen wird.

5. Verfahren nach Anspruch 4, **dadurch gekennzeichnet, daß** in der gesonderten Liste (DST) weitere Informationen über den augenblicklichen Übertragungsstatus der zugehörigen Datenprogramme enthalten sind.

6. Verfahren nach Anspruch 4, **dadurch gekennzeichnet, daß** in der gesonderten Liste weitere Informationen über die Gesamtzahl der Wiederholungen und die laufende Nummer der momentanen Wiederholung der zugehörigen Datenprogramme enthalten sind.

7. Verfahren nach Anspruch 1, **dadurch gekennzeichnet, daß** in der einen oder in den mehreren Listen (DGT, DST) einer oder mehrere der folgenden Parameter über die übertragenen Datendienste enthalten sind:
1) Form des Rahmenwortes für die Byte-Synchronisation des Datendienstes;
2) Datenübertragung seitenweise oder packetweise;
Bei einer seitenweisen Übertragung:
3a) die jeweilige Seitennummer;
3b) 20ms-Regelung erfüllt, nicht erfüllt oder nur teilweise erfüllt;
3c) verwendetes Übertragungsprotokoll;
4) Kanalname.

8. Verfahren nach Anspruch 7, **dadurch gekennzeichnet, daß** die Parameter in einer ersten Daten-Guide-Tabelle (DGT-2) übertragen werden.

9. Verfahren nach Anspruch 8, **dadurch gekennzeichnet, daß** zusätzlich in einer zweiten Daten-Guide-Tabelle (DGT-1) eine Kanalliste mit den verschiedenen Kanalnamen übertragen wird.

## Claims

1. Method for playing back data signals in television or sound radio programme channels, which are separated from the programme signal, the data belonging to identification information are assembled to form a data program and the data thus assembled are intermediately stored, there being contained in the data signal lists which are evaluated at the receiver end, **characterized in that** one or more lists (DGT, DST) contain the following identifiers which are assigned to the identification information (I = 0815):
a) configuration identifiers (COMP, RAM) for a receiver configuration required for receiving, decoding and playing back the data program, and/or
b) file identifiers (Pr, Fi) for data files (Tele.exe, Telefra.00) which are required for decoding and playing back the data program,
the identification information (I = 0815) being assigned plain writing identifiers ("tele-newspaper - morning edition") which are contained in the same list as the identifiers (COMP, RAM; Pr, Fi) or in other lists, and **in that** upon the selection of a plain writing identifier in a list selected by the user a process is initialized in which
c) the configuration identifier (COMP, RAM) assigned to the plain writing identifier ("tele-newspaper - morning edition") is evaluated as to whether the receiver configuration is sufficient for receiving, decoding and playing back the data program identified by the identification information, and/or
d) the file identifiers (Pr, Fi) assigned to the plain writing identifier ("tele-newspaper - morning edition") are evaluated as to whether the data files identified by the file identifiers are present at the receiver end,
and in which on the basis of positive results in step c) and/or in step d) the identification information associated with the selected plain writing ("tele-newspaper - morning edition") is intermediately stored and upon receipt of the intermediately stored identification information the storage of the associated data of the data program is performed, and in which an appropriate message is output to the user on the basis of negative results from step c) and/or from step d).

2. Method according to Claim 1, **characterized in that** further identification information (I = 0815-1) with further assigned configuration identifiers (Comp = 368+, RAM = 1MB) for at least one other system configuration required at the receiver end is contained in the lists (DGT-2), and **in that** in the event of a negative result in step c) instead of the identification information (I = 0815) selected by the user the further configuration identifiers (Comp = 368+, RAM = 1MB) select as a substitute and store intermediately such further identification information (I = 0815-1) whose assigned configuration identifier for the receiver-end system configuration is sufficient for receiving, decoding and playing back the desired data program.

3. Method according to Claim 1, **characterized in that** in the event of a negative result in step d) the identification information (I = 0815), whose associated data files (Tele.exe, Telefra.00) are not present at the receiver end are detected and intermediately stored from the identification information (I = 0915, I = 0916) assigned to the missing data files (Tele.exe, Telefra.00), and **in that** upon receipt of the intermediately stored identification information (I = 0915, I = 0916) storage of the associated data files (Tele.exe, Telefra.00) is performed.

4. Method for transmitting data signals which are played back in accordance with Claims 1 to 3, **characterized by** the repeated transmission of a separate list (DST) which contains at least one item of identification information (I = 0815) and the page or block number(s) under which the data program identified by the identification information is transmitted.

5. Method according to Claim 4, **characterized in that** the separate list (DST) contains further information on the current transmission status of the associated data programs.

6. Method according to Claim 4, **characterized in that** the separate list contains further information on the total number of the repetitions and the serial number of the current repetition of the associated data programs.

7. Method according to Claim 1, **characterized in that** one or more of the following parameters relating to the transmitted data services is/are included in the one or more lists (DGT, DST):
1) form of a frameword for the byte synchronization of the data service;
2) data transmission in a pagewise or packetwise fashion;
given pagewise transmission:
3a) the respective page number;
3b) 20 ms rule fulfilled, not fulfilled or only partially fulfilled;
3c) transmission protocol used;
4) channel name.

8. Method according to Claim 7, **characterized in that** the parameters are transmitted in a first data guide table (DGT-2).

9. Method according to Claim 8, **characterized in that** in addition, a channel list with the various channel names is transmitted in a second data guide table (DGT-1).

## Revendications

1. Méthode de reproduction de signaux de données dans des canaux d'émissions de télévision ou de radio, séparés du signal de programme, les données appartenant à une information d'identification sont regroupées dans un programme de données et les données regroupées de cette manière sont stockées temporairement, des listes étant contenues dans le signal de données et sont évaluées par le récepteur, **caractérisée en ce qu'**une ou plusieurs listes (DGT, DST) contiennent les identificateurs suivants, associés aux informations d'identification (I = 0815) :
a) identificateurs de configuration (COMP, RAM) pour une configuration de réception requise pour la réception, le décodage et la reproduction du programme de données et/ou
b) identificateurs de fichier (Pr, Fi) pour fichiers de données (Tele.exe, Telefra.00) requis pour le décodage et la reproduction du programme de données,
des identificateurs d'écriture en clair ("Journal télévisé - édition du matin") étant associées aux informations d'identification (I = 0815) et qui se trouvent dans la même liste que les identificateurs (COMP, RAM; Pr, Fi) ou dans d'autres listes, et **en ce que** lors de la sélection d'un identificateur d'écriture en clair dans une liste sélectionnée par l'utilisateur, un processus est initialisé, dans lesquels
c) une évaluation de l'identificateur de configuration (COMP, RAM) associé à l'identificateur d'écriture en clair ("Journal télévisé - édition du matin") est effectuée pour savoir si la configuration du récepteur pour la réception, le décodage et la reproduction du programme de données identifié par l'information d'identification est suffisante et/ou
d) une évaluation des identificateurs de fichier (Pr, Fi) associés à l'identificateur d'écriture en clair ("Journal télévisé - édition du matin") est effectuée pour savoir si les fichiers de données identifiés par les identificateurs de fichier existent, et dans lesquels en raison de résultats positifs à l'étape c) et/ou à l'étape d) l'information d'identification associée à l'écriture en clair ("Journal télévisé - édition du matin") sélectionnée est stockée temporairement et lors de la réception de l'information d'identification stockée temporairement, le stockage des données associées du programme de données s'effectue, et dans lesquels, en raison de résultats négatifs à l'étape c:) et/ou à l'étape d), un message correspondant est envoyé à l'utilisateur.

2. Méthode selon la revendication 1, **caractérisée en ce que** d'autres informations d'identification (I = 0815-1) possédant d'autres identificateurs de configuration associés (Comp=368+, RAM=1 MB) pour au moins une autre configuration système requise par le récepteur se trouvent dans les listes (DGT-2) et **en ce que** pour un résultat négatif à l'étape c), au lieu de l'information d'identification (I=0815) sélectionnée par l'utilisateur on sélectionne et met en mémoire temporaire, à l'aide des autres caractéristiques de configuration, en remplacement de ces autres informations d'identification (1=0815-1) celles (Comp=368+, RAM=1 MB) dont l'identificateur de configuration est suffisant pour la configuration système du récepteur pour recevoir, décoder et reproduire le programme de données souhaité.

3. Méthode selon la revendication 1, **caractérisée en ce que** pour un résultat négatif à l'étape d), les informations d'identification (10815) dont les fichiers de données adéquats (Tele.exe, Telefra.00) n'existent pas dans le récepteur, sont détectées et stockées temporairement à partir des informations d'identification (1=0915, 1=0916) associées aux fichiers de données (Tele.exe, ' Telefra. 00) manquants, et **en ce que** le stockage des fichiers de données (Tele.exe, Telefra.00) associés s'effectue lors de la réception des informations d'identification (1=0915, 1=0916) stockées temporairement.

4. Méthode de transfert de signaux de données, reproduits conformément aux renvendications 1 à 3, **caractérisée en ce que** le transfert répété d'une liste (DST) séparée, contenant au moins une information d'identification (1=0815) et le(s) numéro(s) de pages ou de blocs sous lesquels le programme de données, identifié par l'information d'identification, est transféré.

5. Méthode selon la revendication 4, **caractérisée en ce que** la liste (DST) séparée comprend d'autres informations sur le statut de transfert actuel des programmes de données associés.

6. Méthode selon la revendication 4, **caractérisée en ce que** la liste séparée contient d'autres informations sur le nombre total de répétitions et le numéro courant de la répétition actuelle des programmes de données associés.

7. Méthode selon la revendication 1, **caractérisée en ce que** une ou plusieurs listes (DGT, DST) contienne(nt) un ou plusieurs paramètre(s) suivant(s) sur les services de données transférés :
1) forme du mot-cadre pour la synchronisation en octets du service de données ;
2) transfert de données par pages ou par paquets ;
Dans le cas d'un transfert par pages :
3a) le numéro de page respectif ;
3b) règle des 20 ms totalement, partiellement ou pas du tout remplie ;
3c) protocole de transfert utilisé ;
4) nom du canal

8. Méthode selon la revendication 7, **caractérisée en ce que** les paramètres sont transférés dans une première table de guide des données (DGT-2).

9. Méthode selon la revendication 8, **caractérisée en ce qu'**en outre, une liste de canaux comprenant différents noms de canaux est transférée dans une seconde table de guide des données (DGT-1).
